# EUROPEAN PATENT APPLICATION

(11) **EP 1 255 195 A2**
(43) Date of publication of application: **06.11.2002**
(21) Application number: 02445046.2
(22) Date of filing: 11.04.2002
(51) Int. Cl.: G06F 9/44

(54) **Method for presentation of information in a user interface**

(30) Priority: 11.04.2001 SE 0101302
(71) Applicant: Aldata Solution AB, 187 40 Täby (SE)
(72) Inventor: Saifer, Tony, 11230 Stockholm (SE); Wester, Joachim, 18769 Täby (SE); Windahl, Johan, 11425 Stockholm (SE)
(74) Representative: Karlström, Lennart

(57) **Abstract**

The present invention concerns a method for the presentation of information in a user interface, in particular such a user interface as one from which a user can seek or link onwards to further information, for example on web pages. According to the invention, the possible links or search pathways in the user interface are displayed in the form of a loop (1) on which the various possibilities for onwards linking or seeking are displayed in the form of symbols (2, 3, 4, 5), nodes, and that linking or connection to the next level occurs by clicking on or in another manner marking with a steering device that symbol (2, 3, 4, 5), node, to which it is desired to link or connect.

## Description

The present invention concerns a method for the presentation of information in a user interface, in particular such a user interface from which a user can seek or link onwards to further information, for example on web pages.

"User interface" is used in the present invention to denote such a user interface as one displayed on a display, for example the monitor of a PC or hand-held computer, or in a WAP telephone.

It is usual that web pages, for example, contain links or search pathways to other pages. These can be links not only to other pages that are subordinate to the current page, but also to pages located in completely other locations, to which locations links or search pathways can still reach from the current page. This type of linking is found both on commercial pages and on pages totally devoted to information.

It can be difficult not only to discover on such pages the possible further search pathways out from the page, but also to find the way back after some steps of linking, if it is realised that another search selection should have been made at some point along the way.

It is, therefore, one aim of the present invention to achieve a new method that makes it easier to search outwards both forwards and backwards to additional information.

The above-mentioned aim of the invention is achieved with a method in which the possible links on a page are displayed in the form of a loop on which the various possibilities for onwards linking at the next level are displayed in the form of symbols, nodes, and in which linking to the next level occurs by clicking on or in another way marking with a steering device that symbol, node, to which it is desired to link.

A further aim of the invention is to achieve a method that also makes it easier to return to an earlier page, an earlier node.

This additional aim of the invention is achieved in that the possibility is available, when an onwards linking has taken place, of displaying a separate column that shows the route with each page from which onwards linking has occurred, whereby each page displayed along the route in the column is displayed as a node that comprises a link or search pathway back to the page in question, in order to make it possible to return rapidly to the earlier page.

In particular, the loop can be formed by a closed first ring, on which the possible direct links from this are displayed as second rings enclosing a symbol or text for the link that this second ring relates to, and a click in this second ring with a mouse or other steering device then connects a link or search pathway to the page that is related to this second ring. The second rings can in an equivalent manner be equipped with further, third, rings around their circumference in order to display in an equivalent manner pages that lie under the second page. These third rings can then, in turn, be equipped with a fourth set of rings, etc. In this way, a rapidly branching multidimensional node structure in which it is easy to orient oneself is created, while it is simultaneously easy to return with the aid of the column to an earlier page at another level in the structure. Each ring corresponds to one node in the node structure.

When linking onwards to the second ring, only the chosen second ring is displayed, together with the further rings that are present on the second ring, while further second rings that are present on the first ring are not displayed on the display. These can, however, be rapidly reached by clicking on the equivalent page in the column, or by clicking within the ring displayed, towards the centre of the ring that was displayed earlier. Depending on the number of rings, nodes, in each level, it may be possible to display more than two levels simultaneously.

The method according to the invention thus functions as a navigator or a navigation system for exploring onwards in a hierarchy of nodes.

The invention will now be described in the form of a non-limiting embodiment related to an example of a commercial sales site, and with reference to the attached drawings, where **Fig. 1** shows an image of a page displayed on a monitor showing one closed ring with a further four rings that are links to the next pages, **Fig. 2** shows an image of a page in a second level with one second ring on which further rings with links to further pages are located, and **Fig. 3** shows an image of a page containing a final ring.

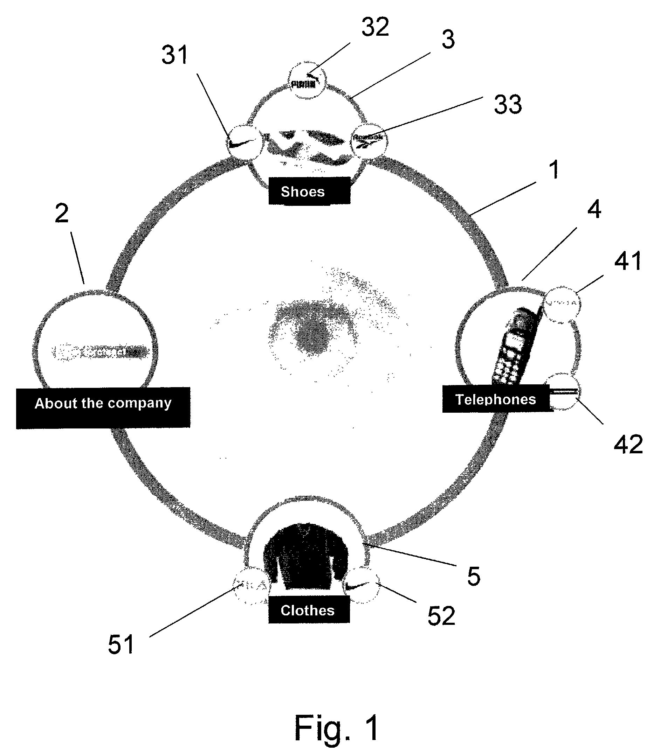

The image of a web page shown in Fig. 1 shows an example of how the first image that a visitor meets may appear when he or she enters the home page of a sales company. The further information that may be present on the page, but that is not relevant for the present invention has not been included in the image. Thus, a closed ring 1 is shown in the figure, around the circumference of which four further rings 2, 3, 4 and 5 are located. Ring 2 in the example chosen comprises information about the company, ring 3 the product area "Shoes", ring 4 the product area "Telephones" and ring 5 the product area "Clothes". A symbol is located in each of the rings 2-5 that is to illustrate what the particular ring relates to, together with a word that denotes what is symbolised in the ring. Programming of the home page has been carried out such that by clicking with, for example, a mouse cursor, in any of the rings 2-5, the visitor moves on to that which is illustrated by that particular ring.

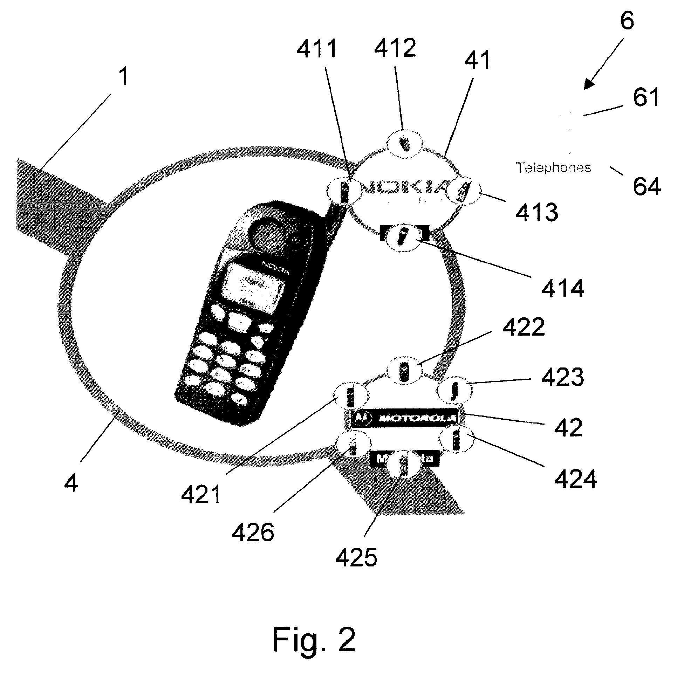

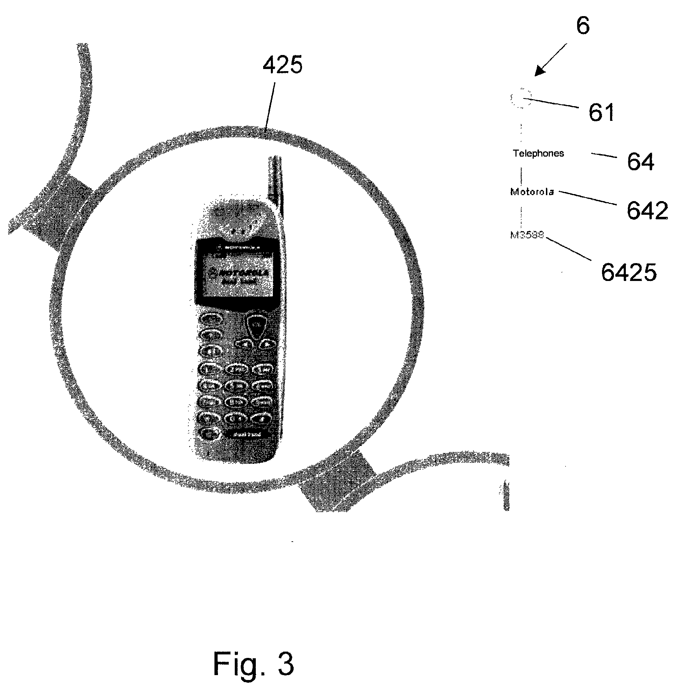

One moves on to further information about telephones by clicking in ring 4, and this information is illustrated in Fig. 2. Fig. 2 shows a magnified image of ring 4, and the original ring 1 is also shown by suggestion in this figure. Ring 4 can be said to be on a second level, while ring 1 is on a first level. Ring 4 in turn comprises two rings 41, 42 that are on a third level. In this case, ring 41 shows information about telephones from the manufacturer "Nokia", while ring 42 shows information about telephones from the manufacturer "Motorola". Each one of the rings 41, 42 comprises in turn further rings that lie on a third level, namely rings 411, 412, 413 and 414 that belong to ring 41, and rings 421, 422, 423, 424, 425 and 426 that belong to ring 42. Each one of these rings 411-414 and 421-426 that lie on the third level corresponds to one product from the relevant manufacturer. By clicking in any one of the rings 41 or 42, one of these is opened as an individual image with the relevant rings of the third level 411-414 or 421-426, respectively, located around the rings 41 and 42, but at a larger scale. However, this is not shown in any of the figures. Fig. 3 shows instead a further step forwards when, after opening ring 42, the visitor has clicked on ring 425, which relates to a mobile telephone from the manufacturer "Motorola" and of the type "M3588", as is shown in Fig. 3.

Since in this case there are no further rings on ring 425, there is no possibility of linking further onwards, and all available information about the product in question is shown in this image. The page can contain, in addition to that which is made clear by the figure, further text information about the product, and possibly other links in order to carry out a purchase of the product. Naturally, it would be possible for ring 425, in turn, in the third level to comprise further rings, such as, for example, rings containing information about technical specifications, accessories, etc.

Fig. 2 and Fig. 3 show the previously mentioned separate column 6, which is shown at the side of the rings 4 and 425, respectively. The column 6 comprises one ring 61 as its starting point, which is equivalent to the starting page with ring 1. Furthermore, the column has, as Fig. 2 makes clear, text lines such as text line 64, the text of which corresponds to the label of ring 4, which, in turn, is the current image that is displayed at the side of the column 6. Two further text lines 642 and 6425 are shown in Fig. 3, which shows two levels further down from Fig. 2. Each one of these text lines in the column 6 comprises a link or search pathway to that page that displays the image that belongs to the particular text line, and thus there is the possibility in Fig. 3 of clicking with the mouse on the starting ring 61 in order to go directly back to the starting page, of clicking on the text line 64 in order to go directly back to the page comprising ring 4, with the possibility of there selecting ring 41 in order to reach telephones from the manufacturer "Nokia", and of clicking on the text line 642 in order to return to the page comprising ring 42 with other telephones from "Motorola". It is also possible to return by clicking within the ring displayed, towards the centre of the previously displayed ring.

It is easy to realise that with the aid of the column 6 one can rapidly return to an earlier branching point that has been passed during the onwards linking, in order to be able to make a new selection and proceed. In particular, it will be realised that this method is a significant advance in the use of linked pages when the linking has taken place over many more steps than that which has been described in detail above.

It may also be possible when linking further onwards to miss out levels in such cases in which the number of rings at one level is limited, such that the rings of the next level are made clear and can be identified, as is the case, for example, for rings 31, 32 and 33 in ring 3, rings 41 and 42 in ring 4, and rings 51 and 52 in ring 5 in Fig. 1. By clicking directly on any one of these smaller rings, which belong to the third level, the step of which Fig. 2 is an example can be missed out, and one can pass directly to, for example, ring 42 with telephones from "Motorola".

As has been mentioned above, it is not necessary that it is a mouse that is used to click on symbols and similar in order to move within the navigation system, but it can be any type of control or steering device. A pointer or a finger, for example, can be used if the display that shows the user interface is what is known as a "touch screen".

It is obvious that the invention can have many more areas of application than just commercial sales sites. It is a significant advantage to use the invention for all types of site where one is compelled to divide the information over several pages that are connected with each other in some manner. For example, civic information from various authorities, course information from schools and universities, timetables, etc., can be advantageously presented with the aid of the method according to the invention. The invention in not only limited to information that is displayed on a web page, but it can be used in other search systems, such as, for example, in fixed networks, or even in an individual PC.

## Claims

1. A method for the presentation of information in a user interface, in particular such a user interface from which a user can seek or link onwards to further information, **characterised in that** the possible links or search pathways in the user interface are displayed in the form of a loop (1) on which the various possibilities for onwards linking or seeking are displayed in the form of symbols (2, 3, 4, 5), nodes, and that linking or connection to the next level occurs by clicking on or in another manner marking with a steering device that symbol (2, 3, 4, 5), node, to which it is desired to link or connect.

2. The method according to claim 1, **characterised in that** the loop (1) is displayed in the form of a closed ring.

3. The method according to claim 2, **characterised in that** the symbols or texts are surrounded by a second ring (2, 3, 4, 5), which second ring (2, 3, 4, 5) in turn comprises a further ring (31, 32, 33; 41, 42; 51, 52) for nodes to which onwards linking or connection can occur.

4. The method according to claim 3, **characterised in that** onwards linking or connection can be made directly to the node represented by the further ring (31, 32, 33; 41, 42; 51, 52).

5. The method according to any one of claims 2-4, **characterised in that** only that ring that corresponds to the node to which onwards linking or connection has taken place is shown after onwards linking or connection to a second or subsequent node, together with those rings that belong to nodes on at least one neighbouring subordinate level.

6. The method according to any one of the previous claims, **characterised in that** a separate column (6) is displayed after an onwards linking or connection has taken place, which column displays the route with each node from which onwards linking or connection has taken place, whereby each node that is shown along the route in the column (6) also comprises a link or search pathway to the node (61, 64, 642, 6425) in question, in order to make it possible to move rapidly back to the previous node.
